# EUROPÄISCHE PATENTANMELDUNG

(11) **EP 3 128 634 A1**
(43) Veröffentlichungstag der Anmeldung: **08.02.2017**
(21) Anmeldenummer: 16183150.8
(22) Anmeldetag: 08.08.2016
(51) Int. Cl.: H02H 9/04, H01C 7/00, H01H 37/00

(54) **SCHUTZSCHALTUNGSANORDNUNG**

(30) Priorität: 07.08.2015 DE 102015215142
(71) Anmelder: PHOENIX CONTACT GmbH & Co. KG, 32825 Blomberg (DE)
(72) Erfinder: Berg, Peter, 33189 Schlangen (DE); Ramsel, Christian, 33161 Hövelhof (DE)
(74) Vertreter: Schmelcher, Thilo

(57) **Zusammenfassung**

Gegenstand der Erfindung ist eine Schutzschaltungsanordnung aufweisend einen Überspannungsableiter (VDR1), eine thermische Sicherung (F2), eine Stromsicherung (F1), wobei die thermische Sicherung und die Stromsicherung in Reihe geschaltet sind und einen ersten Stromzweig bilden, ein Heizelement (R1), eine erste mechanisch vorgespannte thermische Abtrennstelle (F5), welche in thermischer Verbindung mit dem Heizelement (R1) steht, wobei das Heizelement und die erste thermische Abtrennstelle in Reihe geschaltet sind und einen zweiten Stromzweig bilden, wobei der erste Stromzweig und der zweite Stromzweig parallel geschalten sind, wobei die Parallelschaltung in Reihe mit dem Überspannungsableiter (VDR1) geschaltet ist, und wobei die thermische Abtrennstelle mechanisch wirkverbunden mit einer Anzeigeeinrichtung ist.

Gegenstand der Erfindung ist weiterhin eine Schutzschaltungsanordnung aufweisend einen Überspannungsableiter (VDR1), eine Stromsicherung (F1), wobei die Stromsicherung einen ersten Stromzweig bildet, ein Heizelement (R1), wobei das Heizelement einen zweiten Stromzweig bildet, eine erste mechanisch vorgespannte thermische Abtrennstelle (F5), welche in thermischer Verbindung mit dem Heizelement (R1) steht und in Reihe mit dem Überspannungsableiter (VDR1) geschaltet ist, wobei der erste Stromzweig und der zweite Stromzweig parallel geschalten sind, wobei die Parallelschaltung in Reihe mit dem Überspannungsableiter (VDR1) geschaltet ist, und wobei die thermische Abtrennstelle mechanisch wirkverbunden mit einer Anzeigeeinrichtung ist.

## Beschreibung

Die Erfindung betrifft eine Schutzschaltungsanordnung.

Überspannungsschutzgeräte zum Schutz von Energieversorgungsnetzen sind nach der Norm IEC61643-11, Abschnitt 7.2.5.1 mit einer Abtrennvorrichtung auszustatten. Dabei muss das Ansprechen dieser Abtrennvorrichtung von einer zugehörigen Statusanzeige angezeigt werden.

Aus dem Stand der Technik sind zahlreiche Schutzschaltungsanordnungen für Varistoren bekannt.

Es sind unterschiedliche Arten der Anzeigeform bekannt, z.B. mechanische Anzeigen mittels Schiebe- oder Schwenkvorrichtungen, welche direkt thermisch mit den Schutzelementen verbunden sind und unter einer Vorspannung z.B. mittels einer Feder liegen, sowie elektronische Anzeigen, z.B. mithilfe von Anzeigeeinrichtungen wie z.B. LEDs.

Diese Anzeigen sind in aller Regel direkt mit dem Ableiter verbunden und werden bei einer unzulässigen Erwärmung des Ableiters aktiviert.

Nachteilig an den bekannten mechanischen Anzeigen ist, dass diese nur dann sicher anzeigen, wenn eine genügend große Erwärmung durch den Ableiter bereitgestellt wird. Dies ist umso mehr ein Problem, da heute auch für Geräte mit vergleichsweise geringen Leistungen Überspannungsschutz zur Verfügung gestellt wird. Hier ist häufig die Verlustleistung im Fehlerfall des Ableiters nicht ausreichend, um eine Fehlfunktion anzuzeigen.

Zudem finden immer mehr passive Abtrennvorrichtungen Verwendung. Passive Abtrennvorrichtungen haben jedoch in aller Regel keine Möglichkeit eine Auslösung anzuzeigen.

Um diesen Umstand zu begegnen wurden in der Vergangenheit daher elektronische anzeigen entwickelt. Beispielsweise kann eine derartige elektronische Anzeige mit einer grünen sowie roten LEDs ausgestattet sein, welche den Status des Ableiters signalisieren (grün = Ableiter in Ordnung; rot = Ableiter defekt).

Nachteilig an den elektronischen Anzeigen ist, dass diese Hilfsenergie zum Betrieb der elektronischen Anzeige benötigen. Dies ist zum einen aufwändig, zum anderen aber auch fehlerträchtig. Insbesondere bei wechselbaren (z.B. steckbaren modularen) Systemen ist der Stecker mit dem Ableiter in aller Regel im ausgesteckten Zustand Strom- bzw. Spannungslos, sodass der Zustand nicht ohne weiteres abgefragt werden kann.

Auch befinden sich in Ableiter-Anordnungen häufig noch weitere Bauelemente, die in ihrem Status überwacht werden sollen. Diese leiden jedoch auch unter denselben Einschränkungen, wie sie zuvor für Ableiter formuliert wurden. Insbesondere ist festzustellen, dass bei einer abnehmenden Baugröße, die Bereitstellung der Anzeige(n) zunehmend schwieriger wird.

Der Erfindung liegt die Aufgabe zu Grunde, eine verbesserte und kostengünstige Schutzschaltungsanordnung zu schaffen, die einen oder mehrere Nachteile aus dem Stand der Technik vermeidet.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Nachfolgend wird die Erfindung unter Bezugnahme auf die anliegende Zeichnung anhand bevorzugter Ausführungsformen näher erläutert.

Es zeigen
- Fig. 1: eine erste schematische Darstellung einer beispielhafte Ausführungsform der Erfindung in einer beispielhaften Zwei-Leiter-Anordnung,
- Fig. 2: eine erste schematische Darstellung einer beispielhafte Ausführungsform der Erfindung in einer beispielhaften Drei-Leiter-Anordnung,
- Fig. 3: eine zweite schematische Darstellung einer beispielhafte Ausführungsform der Erfindung in einer beispielhaften Zwei-Leiter-Anordnung, und
- Fig. 4: eine zweite schematische Darstellung einer beispielhafte Ausführungsform der Erfindung in einer beispielhaften Drei-Leiter-Anordnung.

Soweit nachfolgend Bezug auf die Figuren genommen wird, werden gleiche Referenzzeichen für gleichartige Elemente verwendet werden. Soweit nicht explizit angegeben können die einzelnen nachfolgend beschriebenen Aspekte in allen Ausführungsformen Anwendung finden. Soweit nachfolgend unbestimmte Artikel verwendet werden ist hierdurch keine Limitierung auf ein einzelnes Element zu sehen, sondern soweit nicht explizit anders vermerkt ist immer auch eine Vielzahl von Elementen mit umfasst.

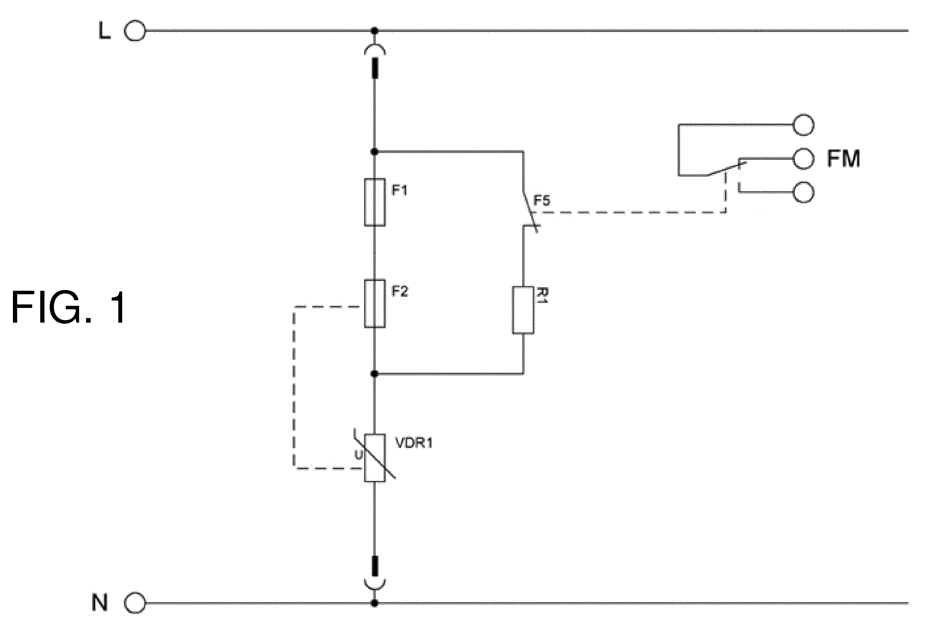

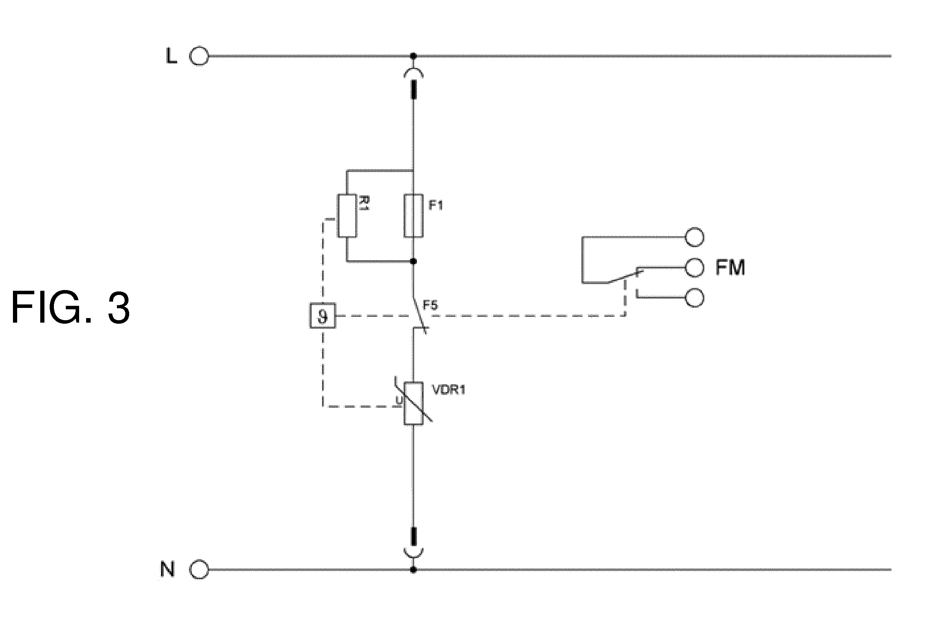

Obwohl in den nachfolgend beschriebenen Figuren Wechselspannungssysteme gezeigt sind, ist die Schaltungsanordnung auch in Drehstrom oder Gleichspannungssystemen verwendbar. D.h. in den allgemeinen Schaltplänen (Abbildung 1 und 3) werden exemplarisch die Bezeichnungen L-N genutzt. Es ist auch möglich diese Schaltungen zwischen anderen Potentialen (z.B. L-L, L-N, L-PE, N-PE, L+-L-, L+-PE, L- - PE) zu nutzen.

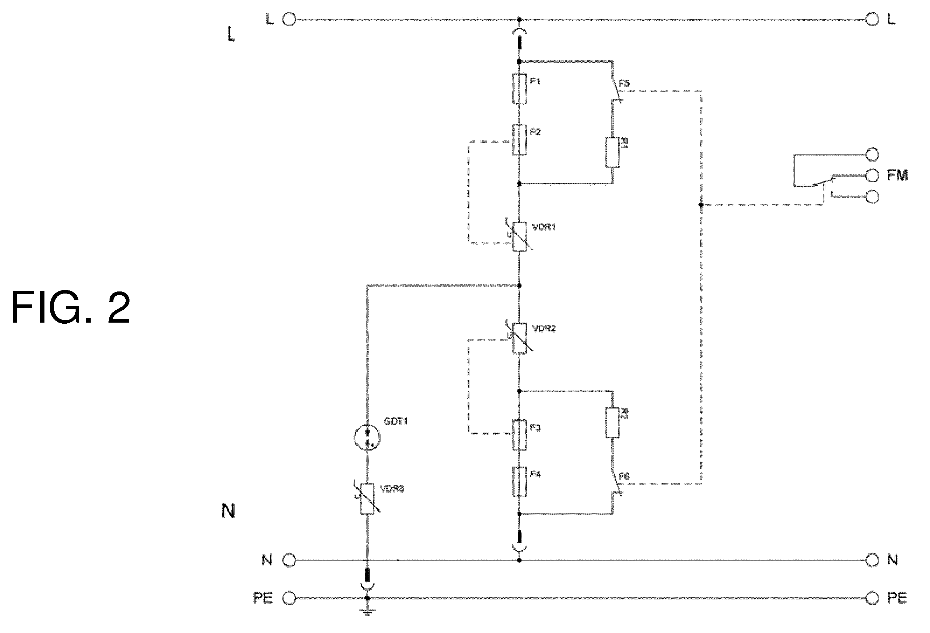

Eine Schutzschaltungsanordnung gemäß der Erfindung weist wie in den Figuren 1 und 2 gezeigt zumindest einen Überspannungsableiter VDR1 auf.

Weiterhin weist eine Schutzschaltungsanordnung gemäß der Erfindung zumindest eine thermische Sicherung F2 und zumindest eine Stromsicherung F1 auf, wobei die thermische Sicherung(en) F2 und die Stromsicherung(en) F1 in Reihe geschaltet sind und einen ersten Stromzweig bilden.

Weiterhin weist eine Schutzschaltungsanordnung gemäß der Erfindung zumindest ein Heizelement R1 und eine erste mechanisch vorgespannte thermische Abtrennstelle F5, welche in thermischer Verbindung mit dem Heizelement R1 steht, auf. Das Heizelement (oder die Heizelemente) R1 und die erste thermische Abtrennstelle F5 sind in Reihe geschaltet und bilden einen zweiten Stromzweig.

Der erste Stromzweig und der zweite Stromzweig sind nun parallel geschalten, wobei die Parallelschaltung in Reihe mit dem/den Überspannungsableiter(n) VDR1 geschaltet ist, und wobei die thermische Abtrennstelle mechanisch wirkverbunden mit einer Anzeigeeinrichtung ist.

Dabei unterscheidet sich die Figur 2 von der Figur 1 dadurch, dass hier der Anschluss der erfindungsgemäßen Schaltungsanordnungen in Bezug auf ein Drei-Leiter-Wechselspannungssystem (L, N, PE) anstatt eines Zwei-Leiter-Wechselspannungssystems (L, N) gezeigt ist. In Figur 2 ist im Prinzip die Schaltungsanordnung zweimal hintereinander in Reihe vorhanden, wobei die Reihenschaltung am Zusammenschaltpunkt um eine Ableitung gegenüber einem PE-Leiter über einen weiteren Ableiter - hier eine beispielhafte Reihenschaltung eines Varistors VDR3 und einer Gasentladungsstrecke GDT1 - ergänzt ist. D.h. Figur 3 zeigt lediglich ein Beispiel für den Einsatz der Schaltungsanordnung in einem Typ 3 Ableiter mit Y-Schaltung.

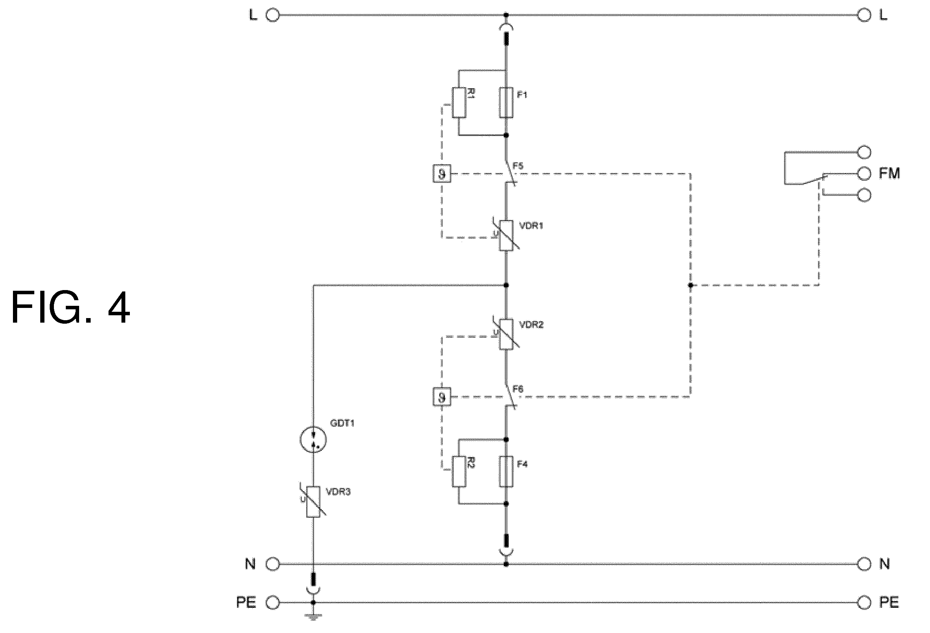

Bevor nachfolgend die Funktion erläutert werden wird, soll nachfolgend zuerst noch eine zweite Schutzschaltungsanordnung gemäß der Erfindung beschrieben werden. Diese weist wie in den Figuren 3 und 4 gezeigt zumindest einen Überspannungsableiter VDR1 auf.

Weiterhin weist eine Schutzschaltungsanordnung gemäß der Erfindung zumindest Stromsicherung F1 auf, wobei die Stromsicherung(en) F1 einen ersten Stromzweig bildet/n.

Weiterhin weist eine Schutzschaltungsanordnung gemäß der Erfindung zumindest ein Heizelement R1 auf. Das Heizelement / die Heizelemente R1 bildet / bilden einen zweiten Stromzweig, wobei der erste Stromzweig und der zweite Stromzweig parallel geschalten sind

Weiterhin weist eine Schutzschaltungsanordnung gemäß der Erfindung zumindest eine erste mechanisch vorgespannte thermische Abtrennstelle F5 auf, welche in thermischer Verbindung mit dem Heizelement R1 steht, auf. Die erste mechanisch vorgespannte thermische Abtrennstelle F5 ist in Reihe mit dem Überspannungsableiter VDR1 geschaltet, wobei Reihenschaltung im logischen Sinne zu verstehen ist, dass der Strom durch die thermische Abtrennstelle F5 gleich dem Strom durch den Überspannungsableiter VDR1 ist, d.h. zwischen dem Überspannungsableiter VDR1 und der thermischen Abtrennstelle F5 können weiter Elemente, insbesondere aber auch die zuvor beschriebenen Stromzweige befindlich sein.

Die Parallelschaltung ist (wie zuvor beschrieben logisch) in Reihe mit dem Überspannungsableiter VDR1 geschaltet, und die thermische Abtrennstelle ist mechanisch wirkverbunden mit einer Anzeigeeinrichtung.

Dabei unterscheidet sich die Figur 4 von der Figur 3 dadurch, dass hier der Anschluss der erfindungsgemäßen Schaltungsanordnungen in Bezug auf ein Drei-Leiter-Wechselspannungssystem (L, N, PE) anstatt eines Zwei-Leiter-Wechselspannungssystems (L, N) gezeigt ist. In Figur 2 ist im Prinzip die Schaltungsanordnung zweimal hintereinander in Reihe vorhanden, wobei die Reihenschaltung am Zusammenschaltpunkt um eine Ableitung gegenüber einem PE-Leiter über einen weiteren Ableiter - hier eine beispielhafte Reihenschaltung eines Varistors VDR3 und einer Gasentladungsstrecke GDT1 - ergänzt ist. D.h. Figur 4 zeigt lediglich ein Beispiel für den Einsatz der Schaltungsanordnung in einem Typ 3 Ableiter mit Y-Schaltung.

Kommt es nun zu einer Überlastung des Ableiters VDR1 / VDR2 so löst die Stromsicherung F1 bzw. F4 und/oder soweit vorhanden die thermische Sicherung F2 bzw. F3 aus und führt zu einer Abtrennung des betreffenden Ableiters VDR1 / VDR2.

Da nun der erste (niederohmige) Stromzweig unterbrochen ist, muss der gesamte Strom über den zweiten (im Vergleich zum betriebsfähigen ersten Stromzweig (sehr) hochohmig) Stromzweig fließen. Ein im zweiten Stromzweig befindliches Heizelement R1 / R2 wird nunmehr vom Gesamtstrom durchflossen und erwärmt sich. Die dabei entstehende Wärme wird auf Grund der thermischen Kopplung an die thermische Abtrennstelle gegeben, sodass nunmehr die thermische Abtrennstelle F5 / F6 soweit erwärmt wird, dass die vollständige Abtrennung erfolgen kann. Da mit der thermischen Abtrennstelle mechanisch wirkverbunden eine Anzeigeeinrichtung vorhanden ist, kann nunmehr mit den Leistungsdaten einer Stromsicherung bzw. einer thermischen Sicherung eine sichere stromlose mechanische Anzeige zur Verfügung gestellt werden, selbst wenn die Sicherungselemente und/oder der Ableiter sonst nicht über die Möglichkeit einer mechanischen Signalsierung verfügen.. Es sei angemerkt, dass neben der thermischen Kopplung an das Heizelement R1 / R2 auch weitere Elemente Wärme zur Auslösung (alternativ oder zusätzlich) zur Verfügung stellen können.

Dabei bleibt anzumerken, dass im normalen Betriebsfall, der Stromfluss durch den zweiten Stromzweig vergleichsweise gering ist, sodass es zu keiner vorzeiteigen Auslösung kommt.

Stromsicherungen, wie sie beispielhaft in der Erfindung Verwendung finden, sind z.B. Schmelzsicherungen. Thermische Sicherungen, wie sie beispielhaft in der Erfindung Verwendung finden, sind z.B. vom nicht rückstellbaren Typ und basieren beispielsweise auf Wood-Legierungen. Eine beispielhafte thermische Abtrennstelle F5 / F6 kann z.B. mittels eines unter Spannung stehenden Abtrennbügels realisiert sein.

In einer vorteilhaften Weiterbildung der Ausführungsformen kann zudem vorgesehen sein, dass die thermische Abtrennstelle F5 / F6 zudem mechanisch wirkverbunden mit einer Fernmeldeeinrichtung FM ist. Dies kann ein üblicher Kontakt sein.

Wie in Figur 2 und 4 angedeutet kann zudem vorgesehen sein, dass eine weitere mechanisch vorgespannte thermische Abtrennstelle F6 zur Verfügung gestellt wird, wobei die erste thermische Abtrennstelle F3 und die weitere thermische Abtrennstelle F6 zudem mechanisch wirkverbunden sein kann. Dabei können ähnlich wie in der Schaltungstechnik die "Ausgänge" der jeweiligen thermischen Abtrennstellen F3 und F6 in einer "und"-Verknüpfung oder in einer "oder"-Verknüpfung auf die Anzeigeeinrichtung einwirken. Natürlich können auch noch weitere Elemente entsprechend verknüpft werden, sodass es auch möglich ist beispielsweise eine thermische "oder"-Schaltung in Bezug auf die thermische Verbindung bereitzustellen.

Dabei können die erfindungsgemäßen Schutzschaltungsanordnungen auf einer Leiterplatte P angeordnet sein. Alternativ kann die Schutzschaltung aber auch in einem Leadframe angeordnet sein. Andere Anordnungen sind jedoch auch ohne weiteres möglich.

Von Vorteil ist, dass die erfindungsgemäßen Schutzschaltungsanordnungen für jegliche Art von Überspannungsableiter (oder auch für andere thermisch empfindliche) Bauelemente verwendet werden kann. Insbesondere kann eine erfindungsgemäße Schutzschaltungsanordnung einen Überspannungsableiter aufweisen, der aus einer Gruppe aufweisend Varistor, Transient-Overvoltage-Diode, Gas-Ableiter, Funkenstrecke ausgewählt sein kann. Ohne weiteres können natürlich auch beleibiege Kombinationen der vorgenannten Bauteile als Ableiter VDR1, VDR2 im Sinne der Erfindung verstanden werden.

Ohne Beschränkung der Allgemeinheit kann das Heizelement R ein herkömmlicher Widerstand oder ein Element mit einem thermisch veränderlichen Widerstand, wie z.B. ein PTC-Widerstand oder aber auch ein Halbleiter, Z.B. ein Transistor sein.

Die erfindungsgemäßen Schutzschaltungsanordnungen ermöglichen es somit sowohl den Ableiter VDR1 und / oder VDR2 zu überwachen und den Status "Ableiter in Ordnung" als auch den Status "Ableiter defekt" zu signalisieren.

Dazu wird durch die erfindungsgemäßen Schutzschaltungsanordnungen eine oder mehrere Abtrennvorrichtungen/Sicherungselemente F1, F2, F3, F4 (z.B. Schmelzsicherungen, Temperatursicherungen, etc.) im Schutzpfad (auch gleichzeitig) überwacht, welche zur Vermeidung kritischer Zustände der Überspannungsschutzelemente VDR1 und / oder VDR2 verwendet werden.

Dabei wird es auch ermöglicht, dass Sicherungselemente zur Abtrennung eines Überspannungsschutzelementes, die nicht über die Möglichkeit verfügen eine Auslösung mittels einer mechanischen Bewegung zu signalisieren, ebenfalls zu verwenden.

Dabei können auch Zustände mehrerer Abtrennvorrichtungen im Schutzpfad - beispielsweise F1, F2 bzw. F3, F4 - zusammengefasst über nur eine Anzeige am Überspannungsschutzgerät angezeigt werden.

Durch die mechanische Auslegung kann der korrekte Ableiter-Status auch ohne zusätzliche Hilfsenergie angezeigt werden.

Zur Überwachung einer oder mehrere mechanisch passiven Abtrennvorrichtungen (z.B. Schmelzsicherungen F1, F4 oder Temperatursicherungen F2, F3 ohne die Möglichkeit eine Auslösung mittels einer mechanischen Bewegung zu signalisieren) im Schutzpfad wird diesen parallel eine weitere thermische Abtrennvorrichtung F5 bzw. F6 in den Ausführungsformen der Figur 1 und 2 in Reihe mit einem Heizelement R1 bzw. R2 geschaltet. Im fehlerfreien Zustand ist der Pfad in dem sich die mechanisch passiven Abtrennvorrichtungen F5 bzw. F6 befinden in einem sehr niederohmigen Zustand, um eine gute Stromübertragung zu gewährleisten. Im Vergleich dazu ist der parallel geschaltete Pfad aufgrund des in Reihe liegenden Heizelementes R1 bzw. R2 (z.B. ein Widerstand oder ein PTC) sehr hochohmig, sodass der Stromfluss durch diesen Zweig vernachlässigt werden kann.

Im Fehlerfall des Überspannungsschutzelements VDR 1 und / oder VDR2 löst mindestens eine der in Reihe geschalteten mechanisch passiven Abtrennvorrichtungen F1, F2 bzw. F3, F4 im Schutzpfad aus und unterbricht den unzulässigen Stromfluss durch das/die Überspannungsschutzelement/e VDR1 und / oder VDR 2. In diesem Zustand ist der Pfad mit den Abtrennvorrichtungen F1, F2 bzw. F3, F4 sehr viel hochohmiger (aufgrund der Trennung) als der parallele Pfad bestehend aus Heizelement R1 bzw. R2 und der weiteren thermischen Abtrennvorrichtung F5 bzw. F6, sodass jetzt ein Stromfluss durch diese entsteht. Hierdurch beginnt das Heizelement R1 bzw. R2 die Trennstelle der weiteren thermischen Abtrennvorrichtung F5 bzw. F6 aufzuheizen bis diese auslöst, dadurch wird auch der Stromfluss durch den parallelen Pfad unterbrochen. Die weitere thermische Abtrennvorrichtung F5 bzw. F6 ist z.B. so ausgestaltet, dass beim Erreichen der Auslösetemperatur ein vorgespanntes Element durch die Auslösebewegung freigegeben wird.

Durch diese mechanische Bewegung kann die Signalisierung des Überspannungsschutzgerätes von Status "grün" => Ableiter in Ordnung auf Status "rot" => Ableiter defekt geändert werden.

Des Weiteren kann die mechanische Aktion ebenfalls zur Aktivierung eines Fernmeldekontaktes (z.B. in Form eines Mikroschalters) genutzt werden.

Dieses Konzept kann beliebig oft in einer Schaltung eingesetzt werden und durch eine mechanische Oder-Verknüpfung der thermischen Abtrennvorrichtungen auf das vorgespannte Element (z.B. Schiebe- oder Schwenkvorrichtung) realisiert werden, sodass am Überspannungsschutzgerät lediglich eine Anzeige zur Signalisierung des Status benötigt wird.

Zur Überwachung einer oder mehrere mechanisch passiven Abtrennvorrichtungen (z.B. Schmelzsicherungen F1, F4 ohne die Möglichkeit eine Auslösung mittels einer mechanischen Bewegung zu signalisieren) im Schutzpfad wird diesen in Reihe eine weitere thermische Abtrennvorrichtung F5 bzw. F6 in den Ausführungsformen der Figur 3 und 4 geschaltet, wobei ein Heizelement R1 bzw. R2 parallel zur mechanisch passiven Abtrennvorrichtungen geschaltet wird.

Die mechanisch passive Abtrennvorrichtung ist beispielweise eine Schmelzsicherung welche das Überspannungsschutzgerät in Fehlerfällen mit einem starken Stromanstieg (z.B. Kurzschluss) schützt.

Die mechanisch aktive Abtrennvorrichtung F5 bzw. F6 ist beispielsweise eine Temperaturtrennstelle, d.h. z.B. bestehend aus einer Lötstelle mit Niedertemperaturlot, welche mit einer mechanischen Vorspannung z.B. mittels eines Schiebers beaufschlagt wird.

Tritt nun durch Alterungseffekte eine unzulässige Erwärmung des Überspannungsschutzelementes (langsame Erwärmung des Überspannungsschutzelementes, z.B. Leckstrom) auf, wird die aktive Abtrennvorrichtung F% bzw. F6 aktiviert und unterbricht dadurch den Stromfluss durch das/die Überspannungsschutzelement/e VDR 1 und / oder VDR2.

Bei der Auslösung vollzieht die aktive Abtrennvorrichtung eine mechanische Bewegung welche eine Signalisierung zur Folge hat. Die Bewegung der Abtrennvorrichtung kann ebenfalls zur Betätigung eines Fernmeldeschalters genutzt werden.

Tritt hingegen ein unzulässiger hoher Stromfluss auf, z.B. im Kurzschlussfall, oder durch einen starken Überspannungspuls so kann das Überspannungsschutzelement VDR 1 und / oder VDR2 in einen niederohmigen Zustand (ähnlich einem Kurzschluss) übergehen.

Dieser Fehlerfall hat einen starken Stromanstieg zur Folge, welcher unterbrochen werden soll.

In vielen Fällen ist die mechanisch aktive Abtrennstelle zu Träge und besitzt oftmals keine ausreichende Schaltleistung (gerade in Hinsicht auf DC-Applikationen) um eine sichere Abtrennung zu gewährleisten.

Aus diesem Grund wird für solche Fehlerfälle eine mechanisch passive Abtrennvorrichtung F1 bzw. F4 (z.B. Schmelzsicherung) zur Verfügung gestellt, welche diesen Stromfluss schnell und sicher unterbricht. Da sich diese innerhalb eines Überspannungsschutzgerätes befinden kann, kann auch die Abtrennung signalisiert werden.

Zu diesem Zweck wird der mechanisch passiven Abtrennvorrichtung F1, F4 ein Heizelement R1 bzw. R2 parallel geschaltet. Im fehlerfreien Zustand ist der Pfad in dem sich die mechanisch passive Abtrennvorrichtung F1, F4 befindet in einem sehr niederohmigen Zustand, um eine gute Stromübertragung zu gewährleisten. Im Vergleich dazu ist der parallel geschaltete Pfad aufgrund des Heizelementes R1 bzw. R2 (z.B. ein Widerstand oder ein PTC) sehr hochohmig, sodass der Stromfluss durch diesen Zweig vernachlässigt werden kann.

Im Fehlerfall des Überspannungsschutzelements VDR 1 und / oder VDR2 löst die mechanisch passive Abtrennvorrichtung F1 bzw. F4 im Schutzpfad aus und unterbricht den unzulässigen Stromfluss durch das/die Überspannungsschutzelement/e VDR 1 und / oder VDR2.

In diesem Zustand ist der Pfad mit der mechanisch passiven Abtrennvorrichtung F1 bzw. F4 sehr viel hochohmiger (aufgrund der Trennung) als der parallele Pfad bestehend aus dem Heizelement R1 bzw. R2, sodass jetzt ein Stromfluss durch diese entsteht. Hierdurch beginnt das Heizelement R1 bzw. R2 die Trennstelle der mechanisch aktiven Abtrennvorrichtung F5 bzw. F6 aufzuheizen bis diese auslöst, wodurch auch der Stromfluss durch den parallelen Pfad unterbrochen wird.

Bei der Auslösung vollzieht die aktive Abtrennvorrichtung F5 bzw. F6 eine mechanische Bewegung, welche eine Signalisierung zur Folge hat.

Die Bewegung der Abtrennvorrichtung kann ebenfalls zur Betätigung eines Fernmeldeschalters genutzt werden.

**Bezugszeichenliste**

| | |
|---|---|
| Elektrische Vorrichtung | 1 |
| Gehäuse | 3 |
| Oberseite | 5 |
| Überspannungsableiter | VDR1, VDR2, VDR3 |
| thermische Sicherung | F2, F3 |
| Stromsicherung | F1, F4 |
| Heizelement | R1, R2 |
| mechanisch vorgespannte thermische Abtrennstelle | F5, F6 |
| Leiterplatte | P |
| Gasentladungsstrecke | GDT1 |

## Patentansprüche

1. Schutzschaltungsanordnung aufweisend
• einen Überspannungsableiter (VDR1),
• eine thermische Sicherung (F2),
• eine Stromsicherung (F1),
• wobei die thermische Sicherung und die Stromsicherung in Reihe geschaltet sind und einen ersten Stromzweig bilden,
• ein Heizelement (R1),
• eine erste mechanisch vorgespannte thermische Abtrennstelle (F5), welche in thermischer Verbindung mit dem Heizelement (R1) steht,
• wobei das Heizelement und die erste thermische Abtrennstelle in Reihe geschaltet sind und einen zweiten Stromzweig bilden,
• wobei der erste Stromzweig und der zweite Stromzweig parallel geschalten sind,
• wobei die Parallelschaltung in Reihe mit dem Überspannungsableiter (VDR1) geschaltet ist, und
• wobei die thermische Abtrennstelle mechanisch wirkverbunden mit einer Anzeigeeinrichtung ist.

2. Schutzschaltungsanordnung aufweisend
• einen Überspannungsableiter (VDR1),
• eine Stromsicherung (F1),
• wobei die Stromsicherung einen ersten Stromzweig bildet,
• ein Heizelement (R1),
• wobei das Heizelement einen zweiten Stromzweig bildet,
• eine erste mechanisch vorgespannte thermische Abtrennstelle (F5), welche in thermischer Verbindung mit dem Heizelement (R1) steht und in Reihe mit dem Überspannungsableiter (VDR1) geschaltet ist,
• wobei der erste Stromzweig und der zweite Stromzweig parallel geschalten sind,
• wobei die Parallelschaltung in Reihe mit dem Überspannungsableiter (VDR1) geschaltet ist, und
• wobei die thermische Abtrennstelle mechanisch wirkverbunden mit einer Anzeigeeinrichtung ist.

3. Schutzschaltungsanordnung nach Anspruch 1 oder 2, **dadurch gekennzeichnet, dass** die thermische Abtrennstelle mechanisch wirkverbunden ist mit einer Fernmeldeeinrichtung.

4. Schutzschaltungsanordnung nach einem der vorhergehenden Ansprüche, **dadurch gekennzeichnet, dass** die erste mechanisch vorgespannte thermische Abtrennstelle (F5) weiterhin auch in thermischer Verbindung mit dem Überspannungsableiter (VDR1) steht.

5. Schutzschaltungsanordnung nach einem der vorhergehenden Ansprüche, weiterhin aufweisend eine weitere mechanisch vorgespannte thermische Abtrennstelle (F6), wobei die erste thermische Abtrennstelle (F3) und die weitere thermische Abtrennstelle (F6) mechanisch wirkverbunden sind und in einer "und"-Verknüpfung oder in einer "oder"-Verknüpfung auf die Anzeigeeinrichtung einwirken.

6. Schutzschaltungsanordnung nach einem der vorhergehenden Ansprüche, **dadurch gekennzeichnet, dass** die Schutzschaltungsanordnung auf einer Leiterplatte (P) angeordnet ist.

7. Schutzschaltungsanordnung nach einem der vorhergehenden Ansprüche, **dadurch gekennzeichnet, dass** der Überspannungsableiter ausgewählt ist aus einer Gruppe aufweisend Varistor, Transient-Overvoltage-Diode, Gas-Ableiter, Funkenstrecke.

8. Schutzschaltungsanordnung nach einem der vorhergehenden Ansprüche, **dadurch gekennzeichnet, dass** das Heizelement (R) ein thermisch veränderlicher Widerstand oder ein Halbleiter ist.
